# EUROPEAN PATENT SPECIFICATION

(11) **EP 4 113 050 B1**
(45) Date of publication and mention of the grant of the patent: **15.07.2026**
(21) Application number: 21182817.3
(22) Date of filing: 30.06.2021
(51) Int. Cl.: F28F 3/12, F28F 9/02, H01M 10/625, H01M 10/6556

(54) **A HEAT EXCHANGER**
WÄRMETAUSCHER
ÉCHANGEUR DE CHALEUR

(43) Date of publication of application: 04.01.2023
(73) Proprietor: Valeo Vymeniky Tepla S.r.o., 26753 Zebrak (CZ)
(72) Inventor: MYSLIKOVJAN, Martin, 267 53 Zebrak (CZ); SUS, Pawel, 96476 Bad Rodach (DE); ZAPOTOCKY, Jakub, 267 53 Zebrak (CZ); FORST, Jan, 267 53 Zebrak (CZ); SIMON, Frederic, 96476 Bad Rodach (DE)
(74) Representative: Valeo Powertrain Systems

(56) References cited:
- EP-A1- 2 260 957
- DE-U1- 202019 102 427
- FR-A1- 3 086 048
- FR-A1- 3 097 627
- US-A- 5 205 348
- US-A1- 2013 161 942
- US-A1- 2018 337 434
- US-A1- 2019 120 123

## Description

### FIELD OF THE INVENTION

The present application relates to the field of heat exchangers, in particular for battery modules and in particular for battery modules of motor vehicles.

### BACKGROUND OF THE INVENTION

The invention is particularly applicable to all electric or hybrid automobiles with a battery pack or battery cells.

A fast charging phase of the electric storage device or battery cells, which consists of charging the electric storage device at a high voltage and amperage, is aimed to charge the electric storage device in a maximum time of a few tens of minutes. This rapid charging involves heating of the electrical storage device, which must be counteracted by effective cooling.

During fast charging, the power generated by the battery is very high, and this is the dimensioning point for the system. In order to extract this thermal power, usually between 10 and 20kW, the exchange surfaces between a heat transfer fluid and the electric cells must be increased.

For this purpose, first heat exchangers are arranged on the battery pack cases and these heat exchangers are connected to a fluid circuit provided with one or more second heat exchangers dissipating the heat into the atmosphere. The connection of the exchangers can be cumbersome and reduces the storage space.

Battery modules typically include a frame in which the battery unit cells are arranged, and it is known to cool battery modules by means of heat exchange plates or heat exchangers comprising panels arranged on the frame and through which a coolant circulates. The heat exchangers are usually made of two pressed plates tightly connected to each other, in which there are formed the meanders or a space for the circulation of the fluid. In this context, it is known to equip the panels with connection points crimped or welded onto or extending from the panels and projecting from the panels to connect them to the external fluid cooling circuit.

Examples of stamped plate heat exchangers and associated fluid connection fittings are provided in DE102017202552. FR 3 097 627 discloses a heat exchanger having the features of the preamble of claim 1.

However, such end fittings are bulky and, because the heat exchanger panels are generally quite thin, the space around the battery modules is important and because of the need to ensure the tightness of such connections, a more compact solution is sought.

It would be desirable to provide a heat exchanger for cooling of heat sources, in particular battery packs or modules, which would allow to limit the bulkiness of the whole arrangement.

### SUMMARY OF THE INVENTION

The object of the invention is a heat exchanger comprising a first plate, a second plate attached to the first plate so that a fluid circulation space is formed between the first plate and the second plate, at least one fluid connector connected fluidly with the fluid circulation space, wherein the fluid connector comprises a first fluid connector component attached to both the first plate and the second plate and comprising a first shaped portion, wherein the second plate comprises a second fluid connector component comprising a second shaped portion which together with the first shape portion forms the fluid connector.

Preferably, at least part of the fluid connector component is sandwiched between the first plate and the second plate.

Preferably, the second fluid connector component is an integral part of the second plate.

Preferably, the first plate comprises a bottom portion and a walled portion extending substantially perpendicularly from the bottom portion.

Preferably, the first shaped portion protrudes in the direction parallel to the direction of the extension of the walled portion from the bottom portion.

Preferably, the first shaped portion and the second shape portion form a fluid channel terminating with a round or elliptical cross-section channel portion.

Preferably, the first shaped portion comprises a first sloped portion which emerges from a first flat portion of the first fluid connector component.

Preferably, the first sloped portion connects the first flat portion with the round or elliptical cross-section channel portion.

Preferably, the transition between the flat portion and the round or elliptical cross-section channel portion is smooth.

Preferably, the second plate comprises fluid flow channels for exchanging heat with a heat source placed in the vicinity of the first plate.

According to the invention, the first fluid connector component is connected to the second fluid connector component by means at least one bent tooth protruding from the first fluid connector component so that the second fluid connector component is sandwiched between the first fluid connector component and the bent tooth.

Preferably, the heat exchanger comprises a plurality of bent teeth at least one side of the fluid connector, in particular along a terminal, outermost edge of the fluid connector.

Preferably, the heat exchanger further comprises a plurality of bent teeth on a second side of the fluid connector, in particular on the connector edge opposite to the terminal, outermost edge of the fluid connector, protruding through openings made in the second plate.

Preferably, on both sides of each bent tooth there are wedge potions protruding from the first fluid connector component in-between the first plate and the second plate.

Preferably, the first fluid connector component comprises a chamfered edge along at least part of the connector edge, wherein the second plate is stamped so as to conform shapely to the chamfered edge.

### BRIEF DESCRIPTION OF DRAWINGS

Examples of the invention will be apparent from and described in detail with reference to the accompanying drawings, in which:
Fig. 1 shows the heat exchanger according to the invention in a perspective view;
Fig. 2 shows a cross-section view of the heat exchanger of Fig. 1;
Fig. 3 shows the first plate with the first fluid connector component;
Fig. 4 shows the arrangement of Fig. 3 with the second plate attached;
Figs. 5a and 5b present an embodiment with additional crimping points;
Fig. 6 presents an example of arrangement between the second plate and the first fluid connector component;
Fig. 7 shows another embodiment of the invention.

### DETAILED DESCRIPTION OF EMBODIMENTS

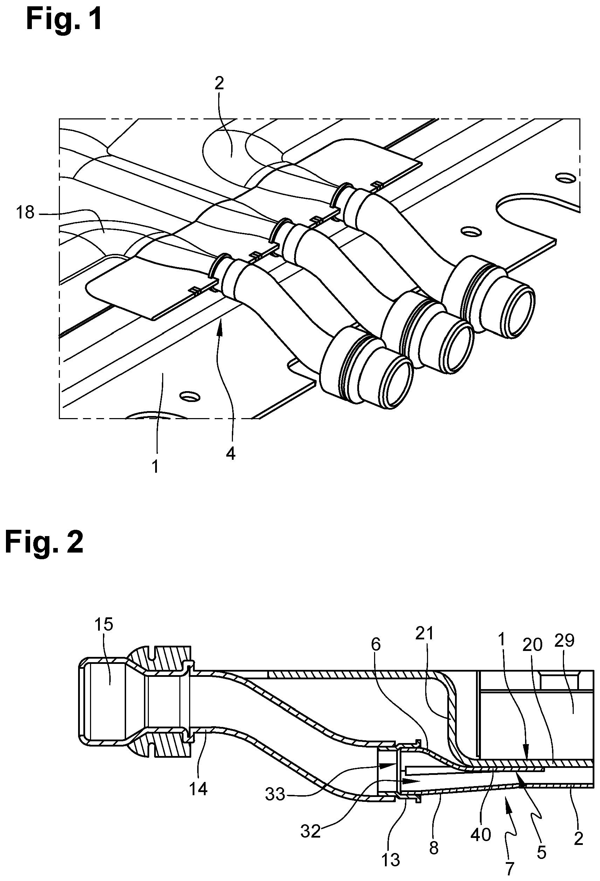

Fig. 1 shows the heat exchanger according to the invention in a perspective view, in particular the area of a heat exchanger with fluid connectors 4.

These serve for entry and exit of a heat exchange fluid, for example a refrigerant or a coolant, used for cooling or heating a component adjacent to the heat exchanger. This may be for example a battery cell or a battery pack. It could also be an electronics unit or any other object with which a heat exchange is desired to take place. The heat exchanger comprises two plates 1, 2 stacked at least partly onto each other, wherein at least one of them comprises formed channels for the heat exchange fluid. Fluid connectors 4 are connected to said channels to enable entry and exit of the heat exchange fluid. In this example, there are three fluid connectors 4, which enables split arrangement on one end of the fluid flow and a joint arrangement on another end of the fluid flow.

Fig. 2 shows a cross-section view of the heat exchanger of Fig. 1. The view is turned upside-down with respect to the heat exchanger of Fig. 1. The heat exchanger comprises a first plate 1 and a second plate 2 attached to the first plate 1 so that a fluid circulation space 3 is formed between the first plate 1 and the second plate 2. At least one fluid connector 4 is connected fluidly with the fluid circulation space 3. The fluid connector 4 comprises a first fluid connector component 5 attached to both the first plate 1 and the second plate 2. The fluid connector 4 comprises a first shaped portion 6. The second plate 2 comprises a second fluid connector component 7 comprising a second shaped portion 8 which together with the first shape portion 6 forms the fluid connector 4. The second fluid connector component 8 may be an integral part of the second plate 2. At least part of the fluid connector component 5 is sandwiched between the first plate 1 and the second plate 2. In particular, the first fluid connector component 5 comprises a flat plate portion 40 which is sandwiched between the first plate 1 and the second plate 2.

The first plate 1 comprises a bottom portion 20 and a walled portion 21 extending substantially perpendicularly from the bottom portion 20. In this manner, a basin is created by the first plate 1. In this basin there may be located a battery cell or a battery pack 29. The first shaped portion 6 protrudes in the direction parallel to the direction of the extension of the walled portion 21 from the bottom portion 20.

In general, all the components may be connected to each other through a brazing process.

The heat exchanger further comprises a shaped tube 14, which is bent so as to shift in the direction of the extension of the walls 21. In this manner, an inlet/outlet connection 15 can be arranged perpendicularly with respect to the heat exchanger general plane without protruding above or below it. The shape tube 14 may be attached to an intermediate sleeve 13. It may be attached to its outside or inside wall.

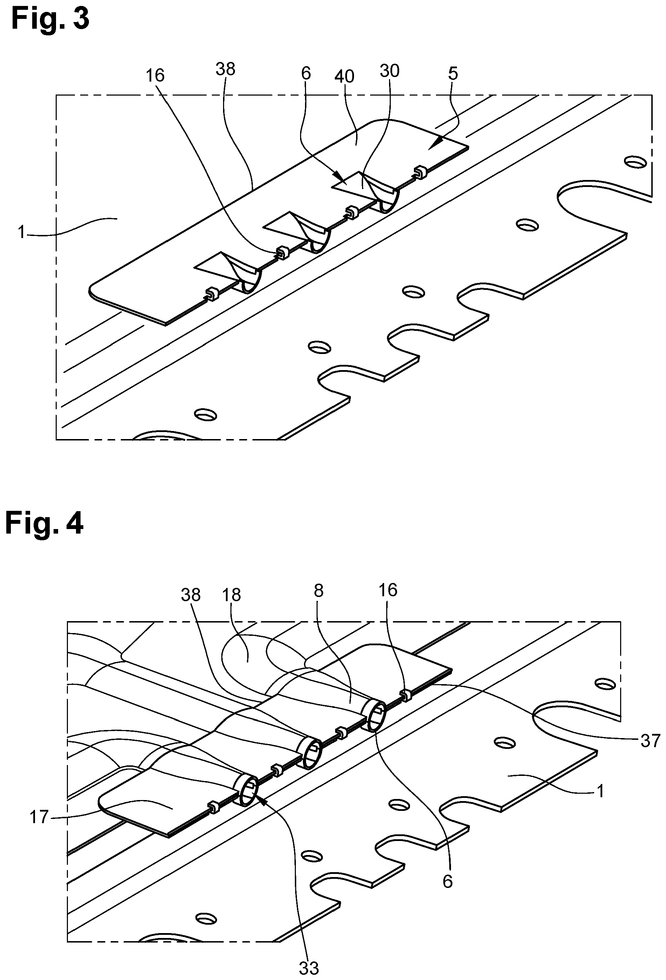

Fig. 3 shows the first plate 1 with the first fluid connector component 5. The first shaped portion 6 and the second shape portion 8 form a fluid channel 32 terminating with a round cross-section channel portion 33. The first shaped portion 6 comprises a first sloped portion 30 which emerges from the flat portion 40 of the first fluid connector component 5. The first sloped portion 30 connects flat portion 40 with the round cross-section channel portion 33, e.g. in a smooth manner. In other words, the transition between the flat portion 40 and the round cross-section channel portion 33 is smooth. Fig. 4 shows the arrangement of Fig. 3 with the second plate 2 attached. The second plate 2 comprises fluid flow channels 18 for exchanging heat with an element placed in the vicinity of the first plate 1, for example placed in the basin formed by the first plate 1.

The first fluid connector component 5 is connected to the second fluid connector component 7 by means at least one bent tooth 16 protruding from the first fluid connector component 5 so that the second fluid connector component 7 is sandwiched between the first fluid connector component 5 and a portion of the bent tooth 16.

Here, a plurality of bent teeth 16 is present on one side of the fluid connector 4, in particular along a terminal, outermost edge 37 of the fluid connector 4. The bent teeth 16 protrude outwardly from the first fluid connector component 5 and are on the second plate 2 (in this case the second fluid connector component 7) so as to extend further parallel to said second plate 2. In the shown example, each round cross-section channel portion 33 is neighbored by the bent teeth 16 on both its sides along the terminal edge.

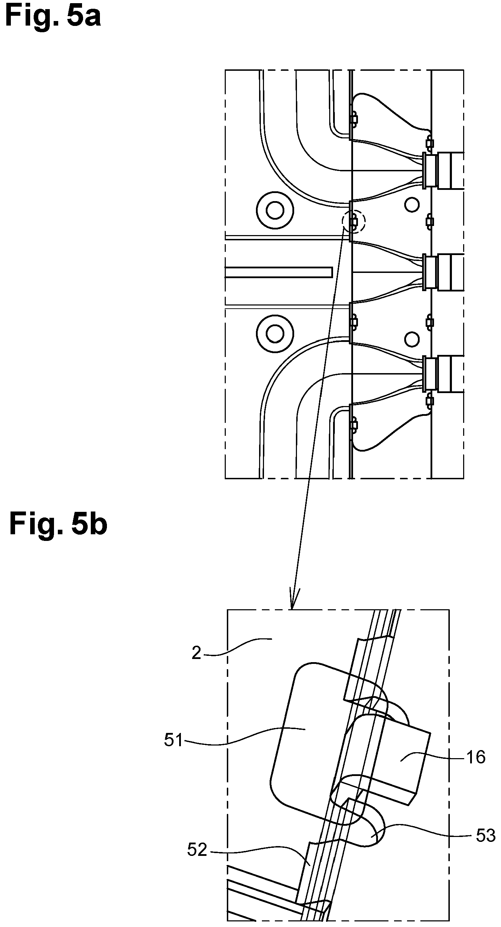

Figs. 5a and 5b present an embodiment with additional crimping points. In particular, Fig. 5a shows a top view of a heat exchanger embodiment in which a plurality of bent teeth 16 is present also on a second side of the fluid connector 4, i.e. on the connector edge 38 opposite to the terminal edge 37 thereof. These can be located for example on both sides of each of the fluid channels 18. Fig. 5b shows one of those bent teeth 16 in greater detail. As can be seen, on this second side the bent tooth 16 protrudes through an opening 51 made in the second plate 2 and is bent thereon. Optionally, on both sides of the bent tooth 16 and/or of the opening 51 there are wedge potions 52 protruding from the first fluid connector component 5, in particular from its edge adjacent to the connector edge 38, in-between the first plate 1 and the second plate 2. These are shaped so as to provide sealing between the sandwiched components and improve brazing connection quality between them. Further optionally, on both sides of the bent tooth 16 and/or of the opening 51 there are cutouts 53 within the first fluid connector component 5 in the vicinity of the bent tooth/teeth 16. Cutouts 53 serve as design feature which ensures that crimping is formed properly (to a desired shape) during crimping process.

In Fig. 5a there can also be observed positioning holes 21. These may serve for positioning of the elements during assembly and before brazing and/or bending of the teeth 16.

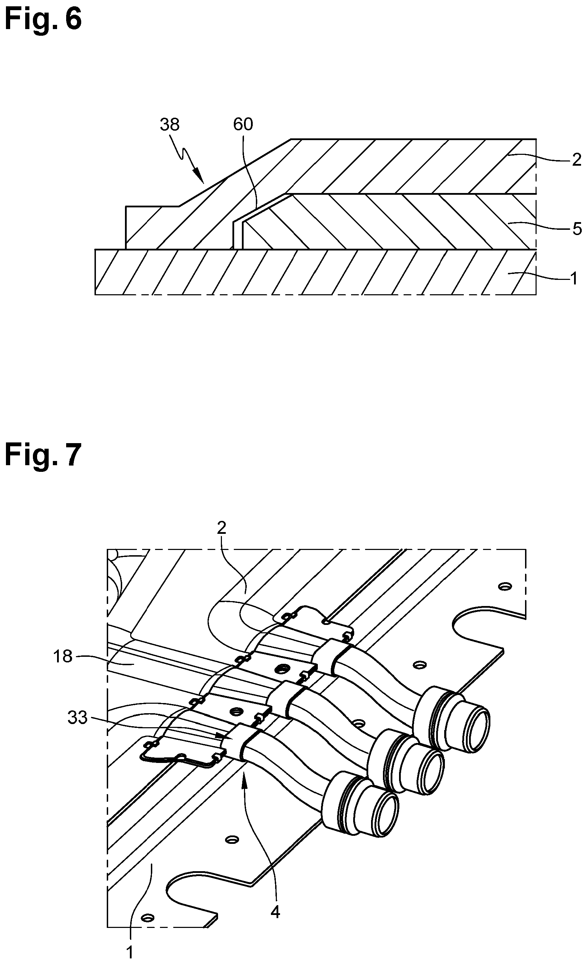

Fig. 6 presents an example of arrangement between the second plate 2 and the first fluid connector component 5. The first fluid connector component 5 comprises a chamfered edge 60 along the outline of the first fluid connector component 5 in the region it starts to be sandwiched between the first plate 1 and the second plate 2, i.e. of the connector edge 38. The second plate 2 is stamped so as to conform shapely to this chamfered edge 60. Such arrangement improves brazing joint quality between said elements. It may occur along the whole perimeter of the second plate 2 region overlapping the first fluid connector component 5 or locally, e.g. in the vicinity of the openings 50, e.g. on both sides of each of them.

Fig. 7 shows another embodiment of the invention. It differs from the previous embodiments in that the first shaped portion 6 and the second shape portion 8 form a fluid channel 32 terminating with an elliptical cross-section channel portion 33.

Because of smooth transition of the fluid path between the channels 18 and the outlet, the connection provides low pressure drop.

Fluid connector according to the invention allows the first plate to remain flat, i.e. does not require any geometrical features to enable fluid connection to the heat exchanger. Necessity to provide flatness of the first plate is connected with integration of the battery, in particular with aspects like heat transfer surface or smooth battery installation.

Other variations to the disclosed embodiments can be understood and effected by those skilled in the art in practicing the claimed invention, from a study of drawings, the disclosure, and the appended claims. The mere fact that certain measures are recited in mutually different dependent claims does not indicate that a combination of these measures cannot be used to the advantage.

## Claims

1. A heat exchanger comprising a first plate (1), a second plate (2) attached to the first plate (1) so that a fluid circulation space (3) is formed between the first plate (1) and the second plate (2), at least one fluid connector (4) connected fluidly with the fluid circulation space (3), wherein the fluid connector (4) comprises a first fluid connector component (5) attached to both the first plate (1) and the second plate (2) and comprising a first shaped portion (6), wherein the second plate (2) comprises a second fluid connector component (7) comprising a second shaped portion (8) which together with the first shape portion (6) forms the fluid connector (4), **characterized in that** the first fluid connector component (5) is connected to the second fluid connector component (7) by means at least one bent tooth (16) protruding from the first fluid connector component (5) so that the second fluid connector component (7) is sandwiched between the first fluid connector component (5) and the bent tooth (16).

2. A heat exchanger according to claim 1, wherein at least part of the fluid connector component (5) is sandwiched between the first plate (1) and the second plate (2).

3. A heat exchanger according to any preceding claim, wherein the second fluid connector component (8) is an integral part of the second plate (2).

4. A heat exchanger according to any preceding claim, wherein the first plate (1) comprises a bottom portion (20) and a walled portion (21) extending substantially perpendicularly from the bottom portion (20).

5. A heat exchanger according to claim 4, wherein the first shaped portion (6) protrudes in the direction parallel to the direction of the extension of the walled portion (21) from the bottom portion (20).

6. A heat exchanger according to any preceding claim, wherein the first shaped portion (6) and the second shape portion (8) form a fluid channel (32) terminating with a round or elliptical cross-section channel portion (33).

7. A heat exchanger according to any preceding claim, wherein the first shaped portion (6) comprises a first sloped portion (30) which emerges from a first flat portion (31) of the first fluid connector component (5).

8. A heat exchanger according to claim 6 and 7, wherein the first sloped portion (30) connects the first flat portion (31) with the round cross-section channel portion (33).

9. A heat exchanger according to claim 8, wherein the transition between the flat portion (40) and the round cross-section channel portion (33) is smooth.

10. A heat exchanger according to any preceding claim, wherein the second plate (2) comprises fluid flow channels (18) for exchanging heat with a heat source placed in the vicinity of the first plate (1).

11. A heat exchanger according to claim 1, wherein it comprises a plurality of bent teeth (16) at least one side of the fluid connector (4), in particular along a terminal, outermost edge (37) of the fluid connector (4).

12. A heat exchanger according to claim 1 or 11, wherein it further comprises a plurality of bent teeth (16) on a second side of the fluid connector (4), in particular on the connector edge (38) opposite to the terminal, outermost edge (37) of the fluid connector (4), protruding through openings (51) made in the second plate (2).

13. A heat exchanger according to claim 12, wherein on both sides of each bent tooth (16) there are wedge potions (52) protruding from the first fluid connector component (5) in-between the first plate (1) and the second plate (2).

14. A heat exchanger according to claim 12, wherein the first fluid connector component (5) comprises a chamfered edge (60) along at least part of the connector edge (38), wherein the second plate (2) is stamped so as to conform shapely to the chamfered edge (60).

## Patentansprüche

1. Ein Wärmetauscher, umfassend eine erste Platte (1), eine zweite Platte (2), die an der ersten Platte (1) befestigt ist, sodass ein Fluidzirkulationsraum (3) zwischen der ersten Platte (1) und der zweiten Platte (2) gebildet wird, mindestens einen Fluidverbinder (4), der fluidisch mit dem Fluidzirkulationsraum (3) verbunden ist, wobei der Fluidverbinder (4) eine erste Fluidverbinderkomponente (5) umfasst, die sowohl an der ersten Platte (1) als auch an der zweiten Platte (2) befestigt ist und einen ersten geformten Abschnitt (6) umfasst, wobei die zweite Platte (2) eine zweite Fluidverbinderkomponente (7) umfasst, die einen zweiten geformten Abschnitt (8) umfasst, der zusammen mit dem ersten geformten Abschnitt (6) den Fluidverbinder (4) bildet, **dadurch gekennzeichnet, dass** die erste Fluidverbinderkomponente (5) mit der zweiten Fluidverbinderkomponente (7) mittels mindestens eines gebogenen Zahns (16) verbunden ist, der von der ersten Fluidverbinderkomponente (5) vorsteht, sodass die zweite Fluidverbinderkomponente (7) zwischen der ersten Fluidverbinderkomponente (5) und dem gebogenen Zahn (16) eingeklemmt ist.

2. Ein Wärmetauscher nach Anspruch 1, wobei mindestens ein Teil der Fluidverbinderkomponente (5) zwischen der ersten Platte (1) und der zweiten Platte (2) eingeklemmt ist.

3. Ein Wärmetauscher nach einem der vorhergehenden Ansprüche, wobei die zweite Fluidverbinderkomponente (8) ein integraler Bestandteil der zweiten Platte (2) ist.

4. Ein Wärmetauscher nach einem der vorhergehenden Ansprüche, wobei die erste Platte (1) einen Bodenabschnitt (20) und einen Wandabschnitt (21) umfasst, der sich im Wesentlichen senkrecht vom Bodenabschnitt (20) erstreckt.

5. Ein Wärmetauscher nach Anspruch 4, wobei der erste geformte Abschnitt (6) in der Richtung parallel zur Erstreckungsrichtung des Wandabschnitts (21) vom Bodenabschnitt (20) vorsteht.

6. Ein Wärmetauscher nach einem der vorhergehenden Ansprüche, wobei der erste geformte Abschnitt (6) und der zweite geformte Abschnitt (8) einen Fluidkanal (32) bilden, der mit einem Kanalabschnitt (33) mit rundem oder elliptischem Querschnitt endet.

7. Ein Wärmetauscher nach einem der vorhergehenden Ansprüche, wobei der erste geformte Abschnitt (6) einen ersten geneigten Abschnitt (30) umfasst, der aus einem ersten flachen Abschnitt (31) der ersten Fluidverbinderkomponente (5) hervorgeht.

8. Ein Wärmetauscher nach Anspruch 6 und 7, wobei der erste geneigte Abschnitt (30) den ersten flachen Abschnitt (31) mit dem Kanalabschnitt (33) mit rundem Querschnitt verbindet.

9. Ein Wärmetauscher nach Anspruch 8, wobei der Übergang zwischen dem flachen Abschnitt (40) und dem Kanalabschnitt (33) mit rundem Querschnitt glatt ist.

10. Ein Wärmetauscher nach einem der vorhergehenden Ansprüche, wobei die zweite Platte (2) Fluidströmungskanäle (18) zum Wärmeaustausch mit einer Wärmequelle umfasst, die in der Nähe der ersten Platte (1) platziert ist.

11. Ein Wärmetauscher nach Anspruch 1, wobei er eine Vielzahl von gebogenen Zähnen (16) an mindestens einer Seite des Fluidverbinders (4), insbesondere entlang einer terminalen, äußersten Kante (37) des Fluidverbinders (4) umfasst.

12. Ein Wärmetauscher nach Anspruch 1 oder 11, wobei er ferner eine Vielzahl von gebogenen Zähnen (16) an einer zweiten Seite des Fluidverbinders (4), insbesondere an der Verbinderkante (38) gegenüber der terminalen, äußersten Kante (37) des Fluidverbinders (4) umfasst, die durch Öffnungen (51) in der zweiten Platte (2) vorstehen.

13. Ein Wärmetauscher nach Anspruch 12, wobei auf beiden Seiten jedes gebogenen Zahns (16) Keilabschnitte (52) vorhanden sind, die von der ersten Fluidverbinderkomponente (5) zwischen der ersten Platte (1) und der zweiten Platte (2) vorstehen.

14. Ein Wärmetauscher nach Anspruch 12, wobei die erste Fluidverbinderkomponente (5) eine abgeschrägte Kante (60) entlang mindestens eines Teils der Verbinderkante (38) umfasst, wobei die zweite Platte (2) so gestanzt ist, dass sie formschlüssig an die abgeschrägte Kante (60) angepasst ist.

## Revendications

1. Echangeur de chaleur comprenant une première plaque (1), une seconde plaque (2) fixée à la première plaque (1) de sorte qu'un espace de circulation de fluide (3) est formé entre la première plaque (1) et la seconde plaque (2), au moins un connecteur de fluide (4) relié de manière fluidique à l'espace de circulation de fluide (3), dans lequel le connecteur de fluide (4) comprend un premier composant de connecteur de fluide (5) fixé à la fois à la première plaque (1) et à la seconde plaque (2) et comprenant une première partie formée (6), dans lequel la seconde plaque (2) comprend un second composant de connecteur de fluide (7) comprenant une seconde partie formée (8) qui, avec la première partie formée (6), forme le connecteur de fluide (4), **caractérisé en ce que** le premier composant de connecteur de fluide (5) est relié au second composant de connecteur de fluide (7) au moyen d'au moins une dent pliée (16) dépassant du premier composant de connecteur de fluide (5) de sorte que le second composant de connecteur de fluide (7) est pris en sandwich entre le premier composant de connecteur de fluide (5) et la dent pliée (16).

2. Echangeur de chaleur selon la revendication 1, dans lequel au moins une partie du composant de connecteur de fluide (5) est prise en sandwich entre la première plaque (1) et la seconde plaque (2).

3. Echangeur de chaleur selon l'une quelconque des revendications précédentes, dans lequel le second composant de connecteur de fluide (8) fait partie intégrante de la seconde plaque (2).

4. Echangeur de chaleur selon l'une quelconque des revendications précédentes, dans lequel la première plaque (1) comprend une partie inférieure (20) et une partie à paroi (21) s'étendant sensiblement perpendiculairement à partir de la partie inférieure (20).

5. Echangeur de chaleur selon la revendication 4, dans lequel la première partie formée (6) dépasse dans la direction parallèle à la direction de l'extension de la partie à paroi (21) à partir de la partie inférieure (20).

6. Echangeur de chaleur selon l'une quelconque des revendications précédentes, dans lequel la première partie formée (6) et la seconde partie formée (8) forment un canal de fluide (32) se terminant par une portion de canal à section transversale ronde ou elliptique (33).

7. Echangeur de chaleur selon l'une quelconque des revendications précédentes, dans lequel la première partie formée (6) comprend une première partie inclinée (30) qui émerge d'une première partie plate (31) du premier composant de connecteur de fluide (5).

8. Echangeur de chaleur selon les revendications 6 et 7, dans lequel la première partie inclinée (30) relie la première partie plate (31) à la portion de canal à section transversale ronde (33).

9. Echangeur de chaleur selon la revendication 8, dans lequel la transition entre la partie plate (40) et la portion de canal à section transversale ronde (33) est lisse.

10. Echangeur de chaleur selon l'une quelconque des revendications précédentes, dans lequel la seconde plaque (2) comprend des canaux d'écoulement de fluide (18) pour échanger de la chaleur avec une source de chaleur placée à proximité de la première plaque (1).

11. Echangeur de chaleur selon la revendication 1, dans lequel il comprend une pluralité de dents pliées (16) sur au moins un côté du connecteur de fluide (4), en particulier le long d'un bord terminal, le plus extérieur (37) du connecteur de fluide (4).

12. Echangeur de chaleur selon la revendication 1 ou 11, dans lequel il comprend en outre une pluralité de dents pliées (16) sur un second côté du connecteur de fluide (4), en particulier sur le bord du connecteur (38) opposé au bord terminal, le plus extérieur (37) du connecteur de fluide (4), dépassant à travers des ouvertures (51) réalisées dans la seconde plaque (2).

13. Echangeur de chaleur selon la revendication 12, dans lequel des deux côtés de chaque dent pliée (16) se trouvent des parties en forme de coin (52) dépassant du premier composant de connecteur de fluide (5) entre la première plaque (1) et la seconde plaque (2).

14. Echangeur de chaleur selon la revendication 12, dans lequel le premier composant de connecteur de fluide (5) comprend un bord chanfreiné (60) le long d'au moins une partie du bord du connecteur (38), dans lequel la seconde plaque (2) est estampée de manière à se conformer en forme au bord chanfreiné (60).
